# EUROPÄISCHE PATENTSCHRIFT

(11) **EP 0 370 427 B1**
(45) Veröffentlichungstag und Bekanntmachung des Hinweises auf die Patenterteilung: **08.09.1993**
(21) Anmeldenummer: 89121427.2
(22) Anmeldetag: 20.11.1989
(51) Int. Cl.: G21C 5/06

(54) **Kerneinbauten eines wassergekühlten Kernreaktors**
Core insertions for a water-cooled nuclear reactor
Equipements du coeur d'un réacteur nucléaire refroidi à l'eau

(30) Priorität: 25.11.1988 DE 3839838
(43) Veröffentlichungstag der Anmeldung: 30.05.1990
(73) Patentinhaber: ABB Reaktor GmbH, D-68167 Mannheim (DE)
(72) Erfinder: Knierriem, Leonhard, D-6120 Erbach (DE); Pötz, Franz, D-6148 Heppenheim (DE); Franke, Heinz, D-6805 Heddesheim (DE)
(74) Vertreter: Rupprecht, Klaus, Dipl.-Ing.

(56) Entgegenhaltungen:
- EP-A- 0 098 774
- FR-A- 2 550 877
- KERNTECHNIK, Band 54, Nr. 2, August 1989, Seiten 92-95, Carl Hanser Verlag, München, DE; R. MÜLLER: "Langzeit-Betriebserfahrungen mit Schraubenverbindungen an Reaktordruckbehälter-Einbauten"

## Beschreibung

Die Erfindung betrifft Kerneinbauten eines wassergekühlten Kernreaktors, deren oberes und unteres Kerngerüst eine Vielzahl von Zentrierstiften trägt, die mit ihren freien Enden in Aussparungen eines Brennelementendstückes ragen.

Derartige Kerneinbauten sind aus dem Thiemig-Taschenbuch "Druckwasserreaktoren für Kernkraftwerke", Ausgabe 1974, Seite 88 bis 92 bekannt. Die dort angeführten Zentrierstifte weisen üblicherweise an ihrem die Gitterplatte durchsetzenden Ende einen Gewindezapfen auf, der das Verspannen des Zentrierstiftes mit einer Mutter erlaubt. Zur Sicherung der Befestigung wird sowohl zwischen der Mutter und der Gitterplatte eines Kerngerüstes als auch zwischen der Mutter und dem Gewindezapfen eine Schweißnaht angebracht.

Insbesondere beim oberen Kerngerüst ist eine große Anzahl der Sicherungsmuttern bei einem späteren Austausch eines beschädigten Zentrierstiftes nicht mehr zugänglich, da sie durch andere Bauteile der Kerneinbauten verdeckt sind.

Es stellt sich die Aufgabe, Kerneinbauten der eingangs genannten Art anzugeben, die ohne Sicherungsmuttern zum Festlegen der Zentrierstifte auskommen.

Gelöst wird diese Aufgabe erfindungsgemäß dadurch, daß der Zentrierstift mit einer durchgehenden Zentrumsbohrung versehen ist, daß die Zentrumsbohrung an ihrem den Brennelementen abgewandten Ende als kegelig zulaufende Stufenbohrung ausgebildet ist, daß die Stufenbohrung einen relativ zum Zentrierstift in axialer Richtung verschiebbaren Stopfen aufweist, dessen Mantelfläche in gleicher Richtung und in gleicher Steigung wie die Stufenbohrung kegelig ausgebildet ist und zu einer selbsthemmenden Kegelverbindung führt, daß der Zentrierstift mit der Bohrung zur Aufnahme des Zentrierstiftes eine möglichst spielfreie Passungsverbindung eingeht und daß in Höhe der Stufenbohrung die Mantelfläche des Zentrierstiftes mit einer Rillung versehen ist, die nach erfolgter Relativbewegung des Stopfens mit der Wand der in der Gitterplatte angebrachten Bohrung eine formschlüssige Verbindung eingeht.

Die möglichst spielfreie Passungsverbindung unterstützt die formschlüssige Verbindung im Bereich der Rillung. Sobald die formschlüssige Verbindung hergestellt ist, unterbindet die nahezu spielfreie Passungsverbindung jegliche Querbewegung des Zentrierstiftes, so daß derartige unerwünschte Beanspruchungen von der formschlüssigen Verbindung ferngehalten werden.

Gemäß einer bevorzugten Ausgestaltung dient zur axialen Verschiebung des Stopfens ein Stößel, der sich durch die Zentrumsbohrung bis in eine Grundbohrung des Stopfens erstreckt. Die auszuübende Stoßkraft ist in Abhängigkeit der Härteunterschiede zwischen der Rillung des Zentrierstiftes und der Bohrungswandung in der Gitterplatte gewählt.

Nach einer weiteren Ausbildung der Kegelverbindung zwischen Stopfen und Stufenbohrung ist der Stopfen mit wenigstens einer Umfangsnut versehen, die bei der das Eindrücken der Rillung bewirkenden Relativbewegung des Stopfens einen Wulst des Materials des Zentrierstiftes im Bereich der Stufenbohrung aufnehmen kann.

Dadurch entsteht zusätzlich zur selbsthemmenden Wirkung der Kegelverbindung eine Sicherung gegen ein Lösen der Zentrierstiftbefestigung.

Oberhalb und unterhalb der Rillung weist die Mantelfläche des Zentrierstiftes eine Freidrehung auf, wodurch das Eindringen der Rillen in die Bohrungswandung erleichtert wird.

Zur Minimierung der Spannungskonzentration im bruchgefährdeten Bereich des Zentrierstiftes wird vorgesehen, daß in eine der Grundplatte zugewandten Schulter eine Nut eingebracht ist, der in einem vorgebbaren Abstand eine Ringnut zugeordnet ist.

Nach einer anderen Ausgestaltung der formschlüssigen Verbindung weist der Zentrierstift einen Rücksprung auf, der ein die formschlüssige Verbindung bewirkendes Zwischenstück aufnimmt.

Anhand eines Ausführungsbeispieles und der Figuren 1 bis 6 werden die erfindungsgemäßen Kerneinbauten beschrieben.

Dabei zeigt die
- Figur 1: einen Längsschnitt durch einen Reaktordruckbehälter mit darin angeordneten Kerneinbauten,
- Figur 2: den Ausschnitt eines Brennelementlagerbeckens mit einem darin abgestellten oberen Kerngerüst,
- Figur 3: den Teilbereich einer Gitterplatte des oberen Kerngerüstes in einem größeren Maßstab mit einem darin befestigten Zentrierstift,
- Figur 4: eine Einzelheit IV der Figur 3 in einem größeren Maßstab mit dem Zentrierstift vor seiner Festlegung,
- Figur 5: den Zentrierstift nach Figur 4 nach seiner Befestigung und
- Figur 6: eine andere Ausbildung der Rillung nach Figur 4.

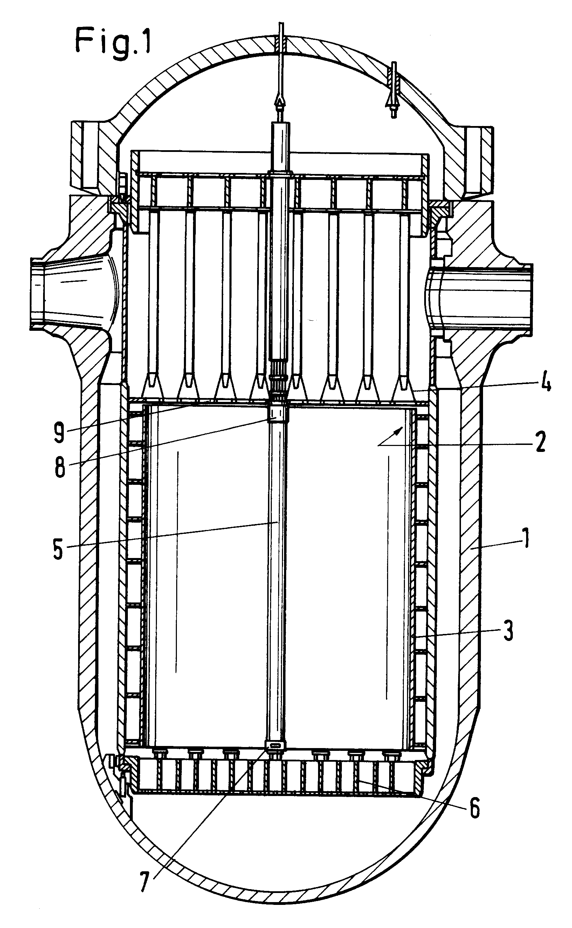

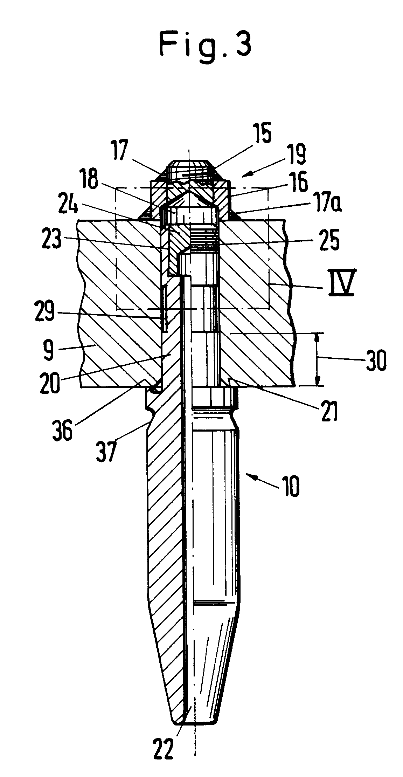

Die Figur 1 zeigt in einem Längsschnitt einen Reaktordruckbehälter 1 einer wassergekühlten Kernreaktoranlage. Die Kerneinbauten 2 bestehen aus dem unteren Kerngerüst 3 und dem oberen Kerngerüst 4 und bilden die Tragstruktur für den Reaktorkern. Von der Vielzahl den Reaktorkern bildenden Brennelemente 5 ist nur ein einziges dargestellt. Die Brennelemente sind auf einem Rost 6 abgestellt, wobei am Rost befestigte Zentrierstifte (nicht dargestellt) in Bohrungen des Brennelementendstückes 7 (Fußstück) ragen. Einem Brennelementendstück 8 (Kopfstück) sind nicht dargestellte Niederhaltefedern zugeordnet, die das Brennelement gegenüber einer Gitterplatte 9 des oberen Kerngerüstes abstützen. In der Gitterplatte 9 sind eine Vielzahl in Richtung Brennelemente erstreckte Zentrierstifte 10 (Figur 3) befestigt, wobei jedem Brennelement in der Regel zwei Zentrierstifte zugeordnet sind und zur Feinzentrierung des Brennelementes in Aussparungen des Brennelementendstückes 8 ragen.

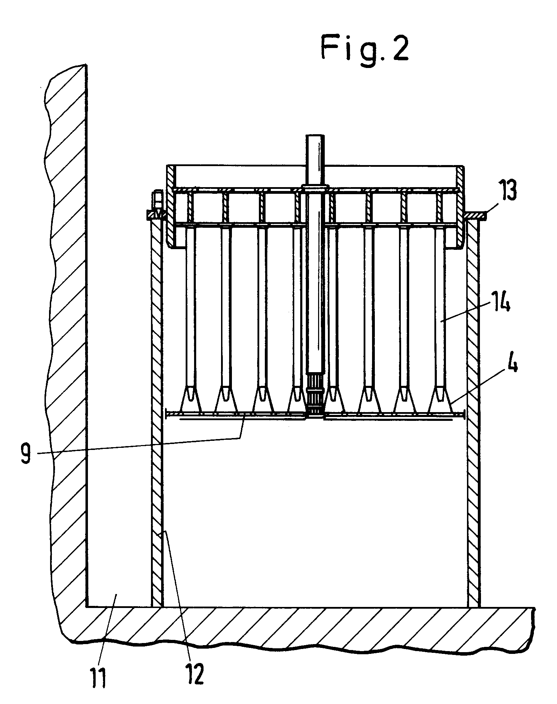

In der Figur 2 ist das obere Kerngerüst 4 in einem Brennelementlagerbecken 11 einer Kernreaktoranlage auf einem dort befindlichen Gestell 12 abgestellt. Das obere Kerngerüst 4 besteht im wesentlichen aus der auf dem Gestell abgestützten Tragplatte 13 und aus den die nicht dargestellten Steuerelementführungseinsätze umgebenden Stützen 14, die die Gitterplatte 9 tragen. Unterhalb des Gestells 12 kann ein nicht dargestellter Manipulator angeordnet sein, der Betrachtungsgeräte trägt.

Wird bei der Besichtigung ein abgebrochener Zentrierstift entdeckt, so wird mit Hilfe von Bearbeitungswerkzeugen und Handhabungsgeräten ein in der Gitterplatte 9 noch befestigtes Bruchstück eines Zentrierstiftes entfernt und durch einen neuen Zentrierstift ersetzt. Als Träger für die Bearbeitungswerkzeuge und Handhabungsgeräte dient ebenfalls ein nicht dargestellter Manipulator.

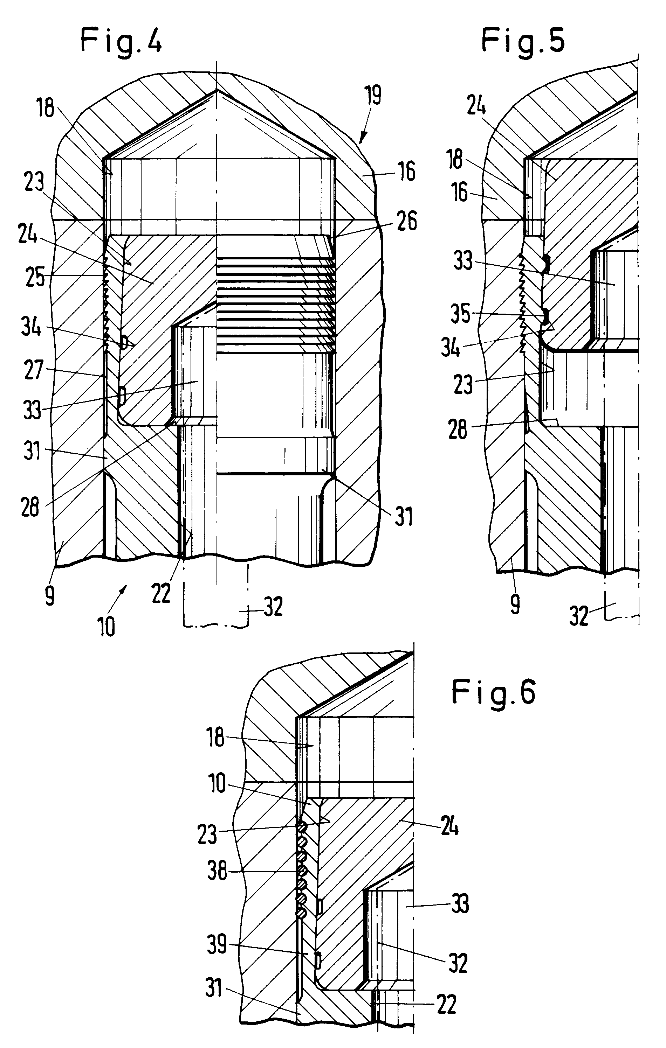

Die Figur 3 zeigt in einem größeren Maßstab einen Ausschnitt aus einer Gittenplatte 9 mit einem dort eingesetzten Zentrierstift 10. In der Gitterplatte 9 war vorher ein Zentrierstift bekannter Bauart eingesetzt, der abgebrochen war und entfernt werden mußte. Von der bekannten Bauart ist noch ein Stück eines Gewindezapfens 15 zu erkennen, der mit einer Mutter 16 gegenüber der Gitterplatte 9 verspannt ist. Zur Sicherung gegen Lösen wurde bei dem bekannten Zentrierstift sowohl zwischen der Mutter 16 und der Gitterplatte 9 als auch zwischen der Mutter und dem Gewindezapfen 15 eine umlaufende Schweißnaht 17, 17a gelegt. Das in der Gitterplatte verbliebene Bruchstück des abgebrochenen Zentrierstiftes wird mit Hilfe des vorgehend genannten Manipulators von der Unterseite der Gitterplatte her derart ausgebohrt, daß eine zylindrische Bohrung 18 entsteht, die sich nur soweit in die Mutter 16 erstreckt, daß die Schweißnähte 17, 17a nicht beschädigt werden und eine aus der Mutter 16 und dem Rest des Gewindezapfens 15 gebildete Kappe 19 erhalten bleibt. Die Kappe 19 verhindert dann zuverlässig, daß bei einem unterstellten Bruch des neueingesetzten Zentrierstiftes Bruchstücke von der Oberseite der Gitterplatte 9 her in den Primärkreislauf der Kernreaktoranlage gelangen. Die Bohrung 18 der Gitterplatte 9 und ein Schaft 20 des Zentrierstiftes 10 werden auf ein Passungsmaß gebracht, das nach dem Einschieben des Zentrierstiftes 10 bis zum Kontakt seiner Schulter 21 mit der Unterseite der Gitterplatte 9 eine spielfreie Passungsverbindung (Haftsitz) eingeht. Der Zentrierstift 10 ist mit einer durchgehenden Zentrumsbohrung 22 versehen, die an ihrem in die Gitterplatte 9 ragenden Ende zu einer Stufenbohrung 23 erweitert ist. Die Mantelfläche der Stufenbohrung ist als Kegel ausgebildet, der sich zur Kappe 19 hin verjüngt. Ein Stopfen 24, der an seiner Mantelfläche in gleicher Art kegelig ausgebildet ist wie die Stufenbohrung, ist in den von der Stufenbohrung begrenzten Raum eingesetzt. Danach erhält der Schaft 20 sein vorgenanntes Passungsmaß und die insbesondere aus der Figur 4 ersichtliche Oberflächenstruktur. Zwar wird in einen Teilbereich der Mantelfläche eine Rillung 25 eingebracht. Oberhalb der Rillung erhält der Schaft 20 eine Abschrägung 26 und unterhalb der Rillung eine Freidrehung 27, die sich bis unterhalb der Schulter 28 der Stufenbohrung 23 erstreckt. Eine weitere Freidrehung 29 ist nach Figur 3 dem mittleren Bereich des Schaftes 20 zugeordnet. Das erforderliche Passungsmaß zur Erzielung eines spielfreien Haftsitzes mit der zylindrischen Bohrung weist der Schaft 20 somit auf dem Bereich 30 (Figur 3) und dem Bund 31 (Figur 4) auf. Der Außendurchmesser der Rillung 25 kann ebenfalls das Passungsmaß aufweisen. Sie ist jedoch in der Regel etwa ca. 0,03 bis 0,10 Millimeter zurückgesetzt, um ein erleichtertes Einschieben des Zentrierstiftes in die Bohrung 18 zu erzielen. Der Haftsitzbereich ist jedenfalls so groß bemessen, daß der Zentrierstift nach dem Einschieben in die Bohrung 18 selbsttätig in seiner Position verbleibt. Der Zentrierstift 10 wird mittels eines nicht dargestellten Setzwerkzeuges bis zum Anliegen der Schulter 21 in die Bohrung 18 eingeschoben. In dieser Position greift dann ein von dem nicht dargestellten Manipulator getragener, in den Figuren 4 und 5 angedeuteter Stößel 32 des Setzwerkzeuges in einer Grundbohrung 33 des Stopfens 24 an denselben an, und bewegt ihn durch hydraulische Beaufschlagung in die in Figur 5 gezeigte Stellung. Aufgrund der Kegelausbildung des Zentrierstiftes im Bereich der Stufenbohrung 23 und des Stopfens 24 wird die Rillung 25 in die Wandung der Bohrung 18 eingedrückt, so daß eine formschlüssige Verbindung entsteht. Die über den Stößel 32 auf den Stopfen 24 ausgeübte Kraft ist in Abhängigkeit der Härtedifferenz zwischen den Werkstoffen der Gitterplatte 9 und der Rillung 25 gewählt. Aufgrund der selbsthemmenden Wirkung der Kegelverbindung zwischen Stopfen und Stufenbohrung ist ein Lösen der formschlüssigen Verbindung ausgeschlossen. Zusätzlich bilden die Umfangsnuten 34 eine Sicherung gegen Lösen der Verbindung, da sie nach erfolgter Relativbewegung des Stopfens eine geringfügige Wulstbildung 35 des Materials der Stufenbohrung 23 aufnehmen.

Der Zentrierstift 10 weist an seiner Schulter 21 eine Nut 36 auf, die in Verbindung mit einer unterhalb der Schulter eingebrachten Ringnut 37 eine Minimierung der Spannungskonzentration im bruchgefährdeten Bereich bringt.

Das Ausführungsbeispiel ist auf den Ersatz eines gebrochenen Stiftes gerichtet. Der erfindungsgemäße Zentrierstift kann jedoch in gleicher Weise bei der Erstbestückung einer Gitterplatte eingesetzt werden. Die bei der beschriebenen Reparatur gezeigte Kappe 19 besteht dann nicht aus den Resten von Mutter 16 und Gewindezapfen 15 sondern kann, wenn ein Schutz erforderlich ist, als einstückiges Bauteil an der Gitterplatte aufgesetzt werden.

Alternativ ist gemäß Figur 6 anstelle der Rillung 25 der Schaft 20 mit einem Rücksprung 39 ausgestattet, der ein Zwischenstück 38 aufnimmt, das die formschlüssige Verbindung bewirkt. Das Zwischenstück kann beispielsweise ein enggewickelter Federdraht entsprechender Härte sein, der dann selbst die Rillung bildet.

## Patentansprüche

1. Kerneinbauten (2) eines wassergekühlten Kernreaktors, deren unteres (3) und oberes Kerngerüst (4) eine Vielzahl von Zentrierstiften (10) tragen, die mit ihren freien Enden in Ausnehmungen eines Brennelementendstückes (7, 8) ragen, dadurch gekennzeichnet, daß die Zentrumsbohrung (22) an ihrem den Brennelementen (5) abgewandten Ende als kegelig zulaufende Stufenbohrung (23) ausgebildet ist, daß die Stufenbohrung (23) einen relativ zum Zentrierstift (10) in axialer Richtung verschiebbaren Stopfen (24) aufnimmt, dessen Mantelfläche in gleicher Richtung und in gleicher Steigung wie die Stufenbohrung kegelig ausgebildet ist, daß der Zentrierstift mit einer Bohrung (18) zur Aufnahme des Zentrierstiftes eine möglichst spielfreie Passungsverbindung eingeht und daß in Höhe der Stufenbohrung die Mantelfläche des Zentrierstiftes mit einer Rillung (25) versehen ist, die nach erfolgter Relativbewegung des Stopfens (24) mit der Wand der in der Gitterplatte (9) angebrachten Bohrung (18) eine formschlüssige Verbindung eingeht.

2. Kerneinbauten nach Anspruch 1, dadurch gekennzeichnet, daß sich bei der Montage des Zentrierstiftes durch die Zentrumsbohrung (22) bis in eine Grundbohrung des Stopfens (24) ein Stößel (32) erstreckt, dessen Stoßkraft in Abhängigkeit der Härteunterschiede zwischen der Rillung (25) des Zentrierstiftes (10) und der Wandung der Bohrung (18) gewählt ist.

3. Kerneinbauten nach Anspruch 1 oder 2, dadurch gekennzeichnet, daß der Stopfen (24) mit wenigstens einer Umfangsnut (34) versehen ist, die nach erfolgter Relativbewegung des Stopfens (24) einen Wulst (35) aus dem Material der Stufenbohrung (23) aufnimmt.

4. Kerneinbauten nach einem der Ansprüche 1 bis 3, dadurch gekennzeichnet, daß die Mantelfläche des Zentrierstiftes (10) oberhalb und unterhalb der Rillung (25) eine Freidrehung (26, 27) aufweist.

5. Kerneinbauten nach einem der Ansprüche 1 bis 4, dadurch gekennzeichnet, daß in eine der Gitterplatte (9) zugewandten Schulter (21) eine Nut (36) eingebracht ist, der in einem vorgebbaren Abstand eine Ringnut (37) zugeordnet ist.

6. Kerneinbauten nach einem der Ansprüche 1 bis 5, dadurch gekennzeichnet, daß der Zentrierstift (10) einen Rücksprung (39) aufweist, der eine die formschlüssige Verbindung bewirkendes Zwischenstück (38) aufweist.

## Claims

1. Core internals (2) of a water-cooled nuclear reactor, the lower (3) and upper core structure (4) of which bear a plurality of centering pins (10), which protrude with their free ends into recesses of a fuel assembly endpiece (7, 8), characterized in that the centre bore (22) is designed at its end away from the fuel assemblies (5) as a conically tapering stepped bore (23), in that the stepped bore (23) receives a plug (24), which is displaceable in axial direction relative to the centering pin (10) and the circumferential surface of which is conically designed in the same direction and with the same pitch as the stepped bore, in that the centering pin enters into a fitting connection with as little play as possible with a bore (18) for receiving the centering pin and in that, on a level with the stepped bore, the circumferential surface of the centering pin is provided with a grooving (25) which, after relative movement of the plug (24) has taken place, enters into a positive connection with the wall of the bore (18) made in the grid plate (9).

2. Core internals according to Claim 1, characterized in that, in the fitting of the centering pin, a tappet (32) extends through the centre bore (22) into a blind bore of the plug (24), the impact force of which tappet is chosen dependently on the differences in hardness between the grooving (25) of the centering pin (10) and of the wall of the bore (18).

3. Core internals according to Claim 1 or 2, characterized in that the plug (24) is provided with at least one peripheral groove (34) which, after a relative movement of the plug (24) has taken place, receives a bead (35) of the material of the stepped bore (23).

4. Core internals according to one of Claims 1 to 3, characterized in that the circumferential surface of the centering pin (10) has a recess (26, 27) above and below the grooving (25).

5. Core internals according to one of Claims 1 to 4, characterized in that a groove (36) is made in a shoulder (21) facing the grid plate (9) and is assigned an annular groove (37) at a predeterminable distance.

6. Core internals according to one of Claims 1 to 5, characterized in that the centering pin (10) has a setback (39), which has an intermediate piece (38) effecting the positive connection.

## Revendications

1. Equipements internes (2) d'un réacteur nucléaire refroidi par eau dont les plaques inférieure (3) et supérieure (4) du coeur portent une pluralité de broches de centrage (10) qui, par leur extrémité libre, pénètrent dans des évidements d'une partie terminale d'assemblage combustible (7, 8), caractérisé par le fait que le perçage central (22), à son extrémité éloignée des assemblages combustibles (5) est agencé sous forme de perçage étagé (23) qui se termine par un cône, par le fait que le perçage étagé (23) reçoit un bouchon (24) qui est mobile axialement par rapport à la broche de centrage (10) et dont la surface périphérique a une forme conique dans la même direction et avec la même pente que le perçage étagé, par le fait que la broche de centrage forme avec un perçage (18) destiné à recevoir ladite broche de centrage un ajustement avec un jeu aussi réduit que possible et par le fait que, dans la région du perçage étagé, la surface périphérique de la broche de centrage est pourvu de stries (25) qui, après déplacement relatif du bouchon (24), réalisent une liaison par obstacle avec la paroi du perçage (18) aménagé dans la plaque-support (9).

2. Equipements internes selon la revendication 1, caractérisés par le fait que, lors du montage de la broche de centrage, une tige-poussoir (32) pénètre dans le perçage central (22) jusque dans un trou borgne du bouchon (24), tige-poussoir dont la force est choisie en fonction de la différence du dureté entre les stries (25) de la broche de centrage (10) et la paroi du perçage (18).

3. Equipements internes selon la revendication 1 ou 2, caractérisée par le fait que le bouchon (24) est pourvu d'au moins une gorge (34) périphérique qui, après le déplacement relatif du bouchon (24), reçoit un bourrelet (35) de la matière du perçage étagé (23).

4. Equipements internes selon l'une des revendications 1 à 3, caractérisé par le fait que la surface périphérique de la broche de centrage (10), au-dessus et au-dessous des stries (25), présente une partie (26, 27) usinée en retrait.

5. Equipements internes selon l'une des revendications 1 à 4, caractérisé par le fait qu'une gorge (36) est aménagée dans un collet (21) tourné vers la plaque-support (9) gorge à laquelle est associée une rainure annulaire (37) disposée à une distance prédéterminée.

6. Equipements internes selon l'une des revendications 1 à 5, caractérisé par le fait que la broche de centrage (10) présente un prolongement (39) avec un élément intermédiaire (38) qui réalise la liaison par obstacle.
